# EUROPÄISCHE PATENTANMELDUNG

(11) **EP 2 639 916 A2**
(43) Veröffentlichungstag der Anmeldung: **18.09.2013**
(21) Anmeldenummer: 13150589.3
(22) Anmeldetag: 09.01.2013
(51) Int. Cl.: H02H 9/04

(54) **Schaltungsanordnung für Stromrichter mit Zwischenkreis, sowie Verfahren zum Betreiben eines Stromrichters**

(30) Priorität: 06.02.2012 DE 102012100951
(71) Anmelder: SEMIKRON Elektronik GmbH & Co. KG, 90431 Nürnberg (DE)
(72) Erfinder: Kraus, Jochen, 90419 Nürnberg (DE); Uhl, Michael, 90475 Nürnberg (DE)

(57) **Zusammenfassung**

Die Erfindung betrifft eine Zusatzschaltung zur aktiven schnellen Entladung eines Zwischenkreises eines Stromrichters über einen PTC-Widerstand, wobei die Entladung vom Leitungszustand des Lastpfads eines Leistungsschalters abhängt, dessen Steuerspannung von der Zwischenkreisspannung abgegriffen wird. Zu diesem Zweck ist eine Zener-Diode vorgesehen, an der die Steuerspannung für den Leistungsschalter abfällt. Durch einen weiteren Halbleiterschalter zur Steuerung des Leistungsschalters kann unter elektrischer Umgehung der Zener-Diode die schnelle Entladung des Zwischenkreises für den normalen Betrieb des Stromrichters gezielt aktiviert oder deaktiviert werden.

## Beschreibung

Die vorliegende Erfindung liegt auf dem Gebiet der Leistungselektronik und betrifft eine Schaltungsanordnung für einen Stromrichter mit einem Spannungszwischenkreis, sowie ein Verfahren zum Betreiben eines solchen Stromrichters.

### Stand der Technik

Vor dem Hintergrund schwindender fossiler Ressourcen werden moderne Kraftfahrzeuge zunehmend mit einem reinen Elektroantrieb mit einem Elektromotor oder einem Hybridantrieb mit einer Kombination aus Elektro- und Verbrennungsmotor ausgestattet.

Im Hinblick auf die erforderliche Motorkraft, müssen Elektromotoren von Kraftfahrzeugen mit einer im Vergleich zum Bordnetz erheblich höheren Betriebsspannung von beispielsweise 400 bis 900 Volt betrieben werden. Die Betriebsspannung wird von einer Gleichstromquelle, typischer Weise ein Akkumulator oder eine Brennstoffzelle, bereitgestellt. Akkumulatoren haben im Unterschied zu Brennstoffzellen den Vorteil, dass sie gleichzeitig als Gleichstromsenke dienen, so dass sie während eines Bremsvorgangs, in dem der Elektromotor als Stromgenerator fungiert, geladen werden können.

In der Regel benötigen Elektromotoren zum Betrieb ein oder mehrere Wechselstromphasen, so dass zwischen der Gleichstromquelle und dem Elektromotor ein Stromrichter vorzusehen ist. In der Fahrzeugtechnik werden überwiegend Drehstrommotoren (permanent- oder fremderregte Asynchron- oder Synchronmotoren) eingesetzt, die von einem 3-Phasen-Wechselrichter zur Umwandlung des Gleichstroms in einen 3-Phasen-Wechselstrom gespeist werden. Durch den 3-Phasen-Wechselrichter können Drehrichtung und Drehzahl des Elektromotors bedarfsgerecht an die jeweilige Fahrsituation angepasst werden.

In einer typischen Bauweise verfügen Stromrichter über einen Spannungszwischenkreis mit einem Zwischenkreiskondensator zur Speisung eines Leistungsmoduls, in dem der Gleichstrom in einen 3-Phasen-Wechselstrom umgesetzt wird. Der Zwischenkreiskondensator ermöglicht eine Spannungsstützung und -glättung für den Betrieb des Elektromotors. Falls erforderlich, kann die Zwischenkreisspannung durch einen Hochsetzsteller gegenüber der Gleichstromquelle erhöht werden. Der grundsätzliche Aufbau eines Stromrichters mit Zwischenkreis ist dem Fachmann an sich wohlbekannt und in der Patentliteratur bereits ausführlich beschrieben worden. Lediglich beispielhaft sei in diesem Zusammenhang auf die deutsche Patentschrift DE 19710371 C1 verwiesen.

Um eine Gefährdung von Personen durch die Hochspannung zu vermeiden, ist dafür Sorge zu tragen, dass der Zwischenkreis entladen wird, wenn das Kraftfahrzeug nicht in Betrieb ist. In der Praxis sind hierfür Widerstandsketten aus ohmschen Widerständen vorgesehen, welche eine passive Entladung des Zwischenkreises über einen Zeitraum von beispielsweise bis zu mehreren Stunden ermöglichen, so dass der normale Betrieb des Stromrichters durch die Entladung nicht beeinträchtigt ist. Nachteilig ist die Tatsache, dass eine solche passive Entladung des Zwischenkreises relativ lange dauert, so dass insbesondere bei einem Unfall eine Gefährdung von Personen durch die Hochspannung des geladenen Zwischenkreises nicht ausgeschlossen werden kann.

### Aufgabenstellung

Demgegenüber besteht die Aufgabe der vorliegenden Erfindung darin, herkömmliche Stromrichter mit Spannungszwischenkreis so weiterzubilden, dass im Vergleich zur passiven Entladung über Widerstandsketten eine wesentlich schnellere Entladung des Zwischenkreises ermöglicht sein soll. Diese und weitere Aufgaben werden nach dem Vorschlag der Erfindung durch eine Schaltungsanordnung für einen Stromrichter mit Spannungszwischenkreis sowie durch ein Verfahren zum Betreiben eines solchen Stromrichters mit den Merkmalen der nebengeordneten Patentansprüche gelöst. Vorteilhafte Ausgestaltungen der Erfindung sind durch die Merkmale der Unteransprüche angegeben.

Erfindungsgemäß ist eine Schaltungsanordnung für einen Stromrichter mit einem über einen Ladungsspeicher verfügenden Spannungszwischenkreis gezeigt, welche im Unterschied zur im Stand der Technik bekannten passiven (d.h. nicht steuerbaren), langsamen Entladung des Zwischenkreises eine aktive (d.h. steuerbare), schnelle Entladung des Zwischenkreises ermöglicht.

Der Ausdruck "Stromrichter", wie hier verwendet, bezieht sich auf an sich bekannte Vorrichtungen zur Wandlung von elektrischer Energie, welche über einen Spannungszwischenkreis verfügen. Stromrichter in diesem Sinne können Gleichstrom-Gleichstrom-Wandler (DC/DC-Wandler) bzw. Zerhacker, Wechselstrom-Gleichstrom-Wandler (AC/DC-Wandler) bzw. Gleichrichter und Gleichstrom-Wechselstrom-Wandler (DC/AC-Wandler) bzw. Wechselrichter, insbesondere mehrphasige Wechselrichter, sein.

Im Folgenden wird davon ausgegangen, dass der Zwischenkreis wie üblich über eine erste Zwischenkreisleitung für ein oberes bzw. höheres Potential und eine zweite Zwischenkreisleitung für ein unteres bzw. niedrigeres Potential verfügt, durch welche die verschiedenen Komponenten (in der Regel Module) des Stromrichters in paralleler Anordnung mit der Zwischenkreisspannung gespeist werden können.

Die erfindungsgemäße Schaltungsanordnung zur aktiven, schnellen Entladung des Zwischenkreises umfasst eine erste Reihenschaltung aus einem elektrischen Widerstand mit positivem Temperaturkoeffizienten und einem als Leistungsschalter ausgebildeten ersten Halbleiterschalter, welche die beiden Zwischenkreisleitungen in Abhängigkeit des Schaltzustands des Leistungsschalters elektrisch verbindet oder trennt. Zu diesem Zweck ist das eine Ende der ersten Reihenschaltung an die erste Zwischenkreisleitung und deren anderes Ende an die zweite Zwischenkreisleitung elektrisch angeschlossen, wobei der erste Halbleiterschalter mit seinem Last- bzw. Leistungspfad in Reihenschaltung mit dem Widerstand mit positivem Temperaturkoeffizienten angeordnet ist.

Die erste Reihenschaltung ist für eine zu- bzw. abschaltbare Entladung des Zwischenkreises über den Widerstand mit positivem Temperaturkoeffizienten (im Folgenden als "PTC-Widerstand" bezeichnet) vorgesehen. Bei dem PTC-Widerstand handelt es sich um ein stromleitendes Material, das bei einer tieferen Temperatur den Strom besser leitet als bei einer höheren Temperatur, da sich der elektrische Widerstand mit steigender Temperatur vergrößert. Vorzugsweise weist der PTC-Widerstand einen solchen elektrischen Widerstand auf, dass der Ladungsspeicher des Zwischenkreises zumindest bis auf eine vorgebbare Restspannung von weniger als 20%, insbesondere weniger als 10%, der Zwischenkreisspannung in einem Zeitraum im einstelligen Sekundenbereich, beispielsweise weniger als 5 Sekunden, entladbar ist. Beispielsweise beträgt der elektrische Widerstand des PTC-Widerstands zu diesem Zweck weniger als 1 kOhm, insbesondere weniger als 500 Ohm. In besonders vorteilhafter Weise kann eine übermäßige Erwärmung des PTC-Widerstands durch den hohen Entladestrom durch den Anstieg des elektrischen Widerstands mit zunehmender Temperatur vermieden werden. Hierbei ist der PTC-Widerstand in Abhängigkeit der zu entladenden Zwischenkreisspannung so ausgelegt, dass dessen Temperatur lediglich bis zu einer maximalen Betriebstemperatur ansteigt, welche weiterhin eine zerstörungsfreie Entladung des Zwischenkreises ermöglicht.

Für die praktische Anwendung ist wesentlich, dass der erste Halbleiterschalter als Leistungsschalter in der Lage ist, die bei einer schnellen Entladung des Zwischenkreises über den PTC-Widerstand auftretenden hohen elektrischen Ströme zu leiten und die am Zwischenkreis anliegende Hochspannung zu sperren. Beispielsweise ist der erste Halbleiterschalter zum Leiten von elektrischen Strömen von mehreren hundert Ampere und Sperren von Spannungen bis ca. 1000 Volt ausgelegt. In der Praxis wird hierfür typischer Weise ein Bipolartransistor mit isolierter Gate-Elektrode (IBGT) mit einer KollektorElektrode als Eingang, einer Emitter-Elektrode als Ausgang und einer Gate-Elektrode als Steuereingang, oder ein Feldeffekttransistor (FET), insbesondere Metalloxid-Feldeffekttransistor (MOSFET), mit einer Drain-Elektrode als Eingang, einer Source-Elektrode als Ausgang und einer Gate-Elektrode als Steuereingang eingesetzt.

Die erfindungsgemäße Schaltungsanordnung umfasst weiterhin eine zweite Reihenschaltung aus einem ohmschen Widerstand und einer Zener-Diode, die in Parallelschaltung zur ersten Reihenschaltung angeordnet ist, wobei das eine Ende der zweiten Reihenschaltung an die erste Zwischenkreisleitung und deren anderes Ende an die zweite Zwischenkreisleitung elektrisch angeschlossen ist.

Die Zener-Diode ist, bezogen auf die Polarität der Zwischenkreisspannung, in Sperrrichtung angeordnet. Wesentlich hierbei ist, dass die Zener-Diode so ausgebildet ist, dass eine im Spannungsdurchbruch über die Zener-Diode abfallende Spannung einer Steuerspannung des ersten Halbleiterschalters entspricht, so dass der erste Halbleiterschalter durch die über die Zener-Diode abfallende Spannung in seinen Durchlasszustand steuerbar ist. Durch die Zener-Diode kann insbesondere erreicht werden, dass der Zwischenkreis nur bis zu einer Restspannung entladen wird, welche durch die Auslegung (Durchbruchsspannung) der Zener-Diode und dem mit der Zener-Diode in Reihe verbundenen ohmschen Widerstand gegeben ist. Zudem fällt unabhängig von der Größe der Zwischenkreisspannung stets eine der Steuerspannung des ersten Halbleiterschalters entsprechende Spannung an der Zener-Diode ab, so dass auch bei variablen Zwischenkreisspannungen der erste Halbleiterschalter stets geschaltet und der Zwischenkreis zuverlässig und sicher entladen werden kann.

Für einen (Mittel-)Abgriff der Steuerspannung ist der Steuereingang des ersten Halbleiterschalters (Leistungsschalter) mit einem Verbindungspunkt zwischen dem ohmschen Widerstand und der Zener-Diode elektrisch verbunden. Eine über die Zener-Diode abfallende Spannung liegt somit als Steuerspannung am Steuereingang des ersten Halbleiterschalters an.

Um die Entladung des Zwischenkreises über den PTC-Widerstand aktiv steuern zu können, ist in der erfindungsgemäßen Schaltungsanordnung der Steuereingang des ersten Halbleiterschalters (Leistungsschalter) über den Lastpfad eines zweiten Halbleiterschalters mit einem Ausgang des ersten Halbleiterschalters (Leistungsschalter) elektrisch verbunden. Der zweite Halbleiterschalter ist in Parallelschaltung zur Zener-Diode angeordnet, so dass eine schaltbare Bypassleitung (Umgehungsleitung) für die Zener-Diode vorliegt. Der Steuereingang des zweiten Halbleiterschalters ist, vorzugsweise unter Zwischenschaltung eines Trennorgans zur galvanischen Trennung, beispielsweise ein Opto-Koppler, mit einer Ansteuerlogik elektrisch verbindbar bzw. verbunden, so dass der zweite Halbleiterschalter wahlfrei in seinen Durchlass- oder Sperrzustand geschaltet werden kann. Befindet sich der zweite Halbleiterschalter im Durchlasszustand sind Steuereingang und Ausgang des ersten Halbleiterschalters unter Umgehung der Zener-Diode kurzgeschlossen, so dass sich der erste Halbleiterschalter im Sperrzustand befindet und eine Entladung des Zwischenkreises über den PTC-Widerstand nicht möglich ist. Im Sperrzustand des zweiten Halbleiterschalters hingegen fällt die Steuerspannung des ersten Halbleiterschalters über der Zener-Diode ab, so dass sich der erste Halbleiterschalter im Durchlasszustand befindet und eine Entladung des Zwischenkreises über den PTC-Widerstand möglich ist.

Der zweite Halbleiterschalter ist beispielsweise als Feldeffekttransistor (MOSFET) ausgebildet, wobei es aufgrund der vergleichsweise geringen Ströme und Spannungen nicht erforderlich ist, den zweiten Halbleiterschalter als Leistungsschalter auszubilden.

Die erfindungsgemäße Schaltungsanordnung schafft somit erstmals die Möglichkeit, dass der Zwischenkreis aktiv (wahlfrei zu- bzw. abschaltbar) über einen PTC-Widerstand mit einem relativ geringem elektrischen Widerstandswert in einem sehr kurzen Zeitraum von beispielsweise einigen Sekunden entladen werden kann. Eine Steuerung des Entladevorgangs erfolgt durch Schalten des zweiten Halbleiterschalters. Unter der Voraussetzung, dass sich der zweite Halbleiterschalter im Sperrzustand befindet, wird der Entladevorgang über den PTC-Widerstand in besonders vorteilhafter Weise alleinig durch Abgreifen einer Steuerspannung für den ersten Halbleiterschalter von der Zwischenkreisspannung ausgelöst, so dass auch bei einem Ausfall der Ansteuerlogik bzw. Unterbrechung einer Steuerleitung für die Schaltungsanordnung (z.B. durch Kabelbruch) eine Entladung des Zwischenkreises stets gewährleistet ist.

Bei einer vorteilhaften Ausgestaltung der erfindungsgemäßen Schaltungsanordnung ist der Steuereingang des zweiten Halbleiterschalters, vorzugsweise über einen ohmschen Widerstand, mit der zweiten Zwischenkreisleitung für das untere Potential der Zwischenkreisleitung elektrisch verbunden. Durch diese Maßnahme kann erreicht werden, dass sich der zweite Halbleiterschalter auch dann stets im Sperrzustand befindet, wenn eine Steuerung über die Ansteuerlogik (z.B. bei Kabelbruch) ausfällt und der Steuereingang nicht mit einem definierten Potential versorgt wird. Es kann somit zuverlässig ausgeschlossen werden, dass der zweite Halbleiterschalter unabsichtlich durch ein undefiniertes Potential in seinen Durchlasszustand geschaltet wird, was in unerwünschter Weise eine Inaktivierung der schnellen Entladung über den PTC-Widerstand zur Folge hätte.

Bei einer weiteren vorteilhaften Ausgestaltung der erfindungsgemäßen Schaltungsanordnung ist ein Eingang des zweiten Halbleiterschalters mit dem Verbindungspunkt zwischen dem ohmschen Widerstand und der Zener-Diode der zweiten Reihenschaltung elektrisch verbunden, wodurch eine technisch besonders einfache elektrische Verbindung des Lastpfads des zweiten Halbleiterschalters mit dem Steuereingang des ersten Halbleiterschalters ermöglicht ist. Gleichermaßen ergibt sich eine technisch besonders einfache Gestaltung der Schaltungsanordnung wenn der Ausgang des zweiten Halbleiterschalters mit der zweiten Zwischenkreisleitung elektrisch verbunden ist.

Bei einer weiteren vorteilhaften Ausgestaltung der erfindungsgemäßen Schaltungsanordnung sind die beiden Zwischenkreisleitungen über zumindest einen ohmschen Widerstand, dessen Widerstandwert vorzugsweise wenigstens um einen Faktor 500 größer ist als der Widerstandswert des PTC-Widerstands elektrisch miteinander verbunden, so dass zusätzlich zur aktiven, schnellen Entladung eine passive, langsame Entladung des Zwischenkreises gegeben ist.

Die Erfindung erstreckt sich weiterhin auf einen Stromrichter, insbesondere ein Wechselrichter, beispielsweise ein 3-Phasen-Wechselrichter, mit einer wie oben beschriebenen Schaltungsanordnung.

Des Weiteren erstreckt sich die Erfindung auf ein Kraftfahrzeug mit einem Elektro- oder Hybridantrieb, das mit einem solchen Stromrichter zur Speisung eines Elektromotors ausgerüstet ist.

Ferner erstreckt sich die Erfindung auf ein Verfahren zum Betreiben eines Stromrichters mit einem einen Ladungsspeicher aufweisenden Spannungszwischenkreis. In dem erfindungsgemäßen Verfahren wird, gesteuert von einem mit einem Spannungsabgriff der Zwischenkreisspannung gekoppelten zweiten Halbleiterschalter, eine Steuerspannung für einen als Leistungsschalter ausgebildeten ersten Halbleiterschalter von der Zwischenkreisspannung abgegriffen und der Zwischenkreis über eine Reihenschaltung aus einem Widerstand mit positivem Temperaturkoeffizienten und einem durch die Steuerspannung auf Durchlass geschalteten Lastpfad des Leistungsschalters entladen. Der Zwischenkreis wird entladen, falls sich der mit dem Spannungsabgriff gekoppelte zweite Halbleiterschalter im Sperrzustand befindet, bzw. nicht entladen, falls sich der mit dem Spannungsabgriff gekoppelte zweite Halbleiterschalter im Durchlasszustand befindet. Vorzugsweise wird der Ladungsspeicher in einem Zeitraum im einstelligen Sekundenbereich entladen.

Bei einer vorteilhaften Ausgestaltung des Verfahrens wird ein Steuereingang des zweiten Halbleiterschalters durch ein unteres Potential der Zwischenkreisspannung vorgespannt, wodurch, wie oben bereits erwähnt, ein undefinierter Zustand des Steuereingangs bei Ausfall der Ansteuerlogik vermieden werden kann.

Es versteht sich, dass die verschiedenen Ausgestaltungen der Erfindung einzeln oder in beliebigen Kombinationen realisiert sein können, um Verbesserungen herkömmlicher Stromrichter mit Zwischenkreisen zu erreichen. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der vorliegenden Erfindung zu verlassen.

### Ausführungsbeispiel

Die Erfindung wird nun anhand eines Ausführungsbeispiels näher erläutert, wobei Bezug auf die beigefügten Zeichnungen genommen wird. Es zeigen:
- Fig. 1: eine schematische Darstellung eines 3-Phasen-Wechselrichters mit einer Schaltungsanordnung zur aktiven und passiven Entladung des Zwischenkreises;
- Fig. 2: eine schematische Darstellung der Schaltungsanordnung zur Entladung des Zwischenkreises des 3-Phasen-Wechselrichters von Fig. 1.

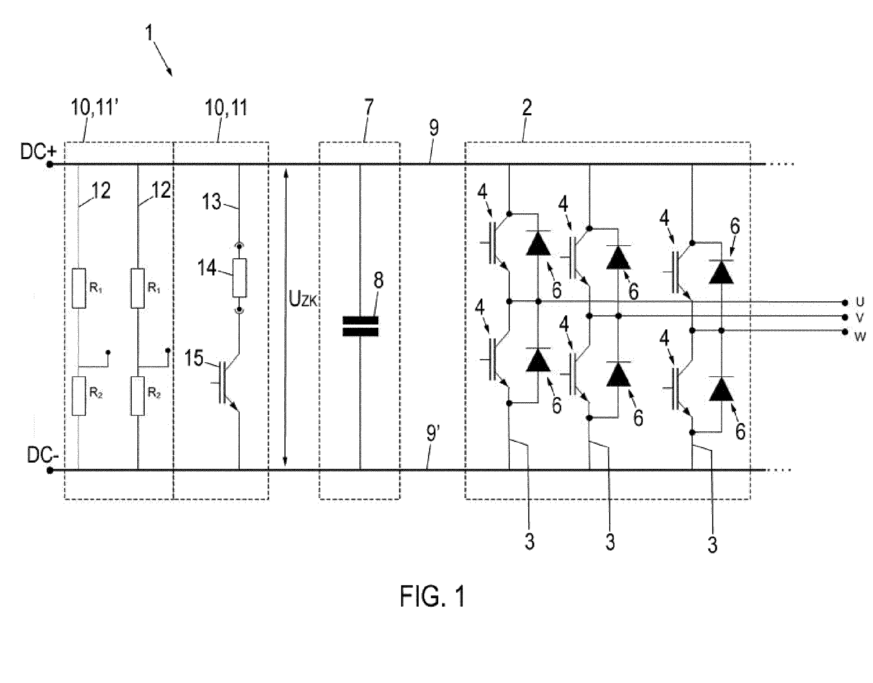

Sei zunächst Fig. 1 betrachtet, worin anhand einer schematischen Darstellung ein Ausführungsbeispiel eines insgesamt mit der Bezugszahl 1 bezeichneten, erfindungsgemäßen 3-Phasen-Wechselrichters zur Wandlung einer Gleichspannung in drei Wechselstromphasen veranschaulicht ist. Der 3-Phasen-Wechselrichter 1 dient hier beispielsweise zur Speisung eines 3-Phasen-Drehstrommotors eines Kraftfahrzeugs mit Elektro- oder Hybridantrieb, was in Fig. 1 nicht näher dargestellt ist.

Der 3-Phasen-Wechselrichter 1 hat einen modularen Aufbau und umfasst eine Mehrzahl paralleler Module, von denen in Fig. 1 nur jene dargestellt sind, welche dem Verständnis der Erfindung dienen. So umfasst der 3-Phasen-Wechselrichter 1 ein Leistungsmodul 2 mit drei Halbbrücken 3 zur Erzeugung von drei Wechselstromphasen. Jede Halbbrücke 3 verfügt in an sich bekannter Weise über ein Schalterpaar aus zwei in Reihe geschalteten Leistungsschaltern 4, die typischer Weise als Leistungstransistoren, z.B. bipolare Leistungstransistoren mit isolierter Gate-Elektrode (IGBTs) oder Leistungs-MOSFETs, ausgebildet sind. Jedem Leistungsschalter 4 ist eine Freilaufdiode 6 mit entgegen gesetzter Durchlassrichtung parallel geschaltet.

Drei Anschlussklemmen u, v, w zur Verbindung der erzeugten Wechselstromphasen mit einer Last sind jeweils mit einem nicht näher bezeichneten Verbindungspunkt zwischen zwei in Reihe geschalteten Leistungsschaltern 4 einer selben Halbbrücke 3 elektrisch verbunden. Die drei Halbbrücken 3 sind jeweils an ein einzige Anschlussklemme u, w, w elektrisch angeschlossen. Im beispielhaft betrachteten Elektro- bzw. Hybridantrieb eines Kraftfahrzeugs sind die drei Anschlussklemmen u, v, w jeweils mit einem Wicklungsstrang (nicht gezeigt) des 3-Phasen-Drehstrommotors elektrisch verbunden, wobei jedem Wicklungsstrang zur Steuerung von Drehrichtung und Drehzahl des 3-Phasen-Drehstrommotors ein Potential vorbestimmter Polarität für eine bestimmte Zeitdauer geliefert wird. Zu diesem Zweck werden die Leistungsschalter 4 von einer Ansteuerlogik (nicht gezeigt) bzw. Motorsteuerung entsprechend angesteuert, was dem Fachmann an sich bekannt ist, so dass hier nicht näher darauf eingegangen werden muss.

Das Leistungsmodul 2 wird durch einen (Spannungs-)Zwischenkreis 7 mit einer Zwischenkreisspannung U_{ZK} (Gleichspannung) gespeist, zu welchem Zweck die Halbrücken 3 in Parallelschaltung mit zwei Zwischenkreisleitungen 9, 9' elektrisch verbunden sind. Der Zwischenkreis 7 verfügt zu diesem Zweck über einen als Zwischenkreiskondensator 8 ausgebildeten Ladungsspeicher, der an die beiden Zwischenkreisleitungen 9, 9' so angeschlossen ist, dass eine erste Zwischenkreisleitung 9 ein oberes bzw. höheres Potential (DC+) und eine zweite Zwischenkreisleitung 9' ein unteres bzw. niedrigeres Potential (DC-) aufweist. Aus der Differenz der beiden Potentiale (DC+, DC-) ergibt sich die Zwischenkreisspannung U_{ZK}, welche von den Halbbrücken 3 zu den drei Wechselstromphasen umgesetzt wird.

Um über eine für den Betrieb des Kraftfahrzeugs ausreichende Motorleistung zu verfügen, muss die Zwischenkreisspannung U_{ZK} ausreichend groß sein. Beispielsweise liegt die Zwischenkreisspannung U_{ZK} im Bereich von 400-900 Volt. Die Kapazität des Zwischenkreiskondensators 8 beträgt hier beispielsweise 1000 µF.

Der Zwischenkreiskondensator 8 kann durch eine an die beiden Zwischenkreisleitungen 9, 9' angeschlossene Gleichstromquelle (nicht gezeigt), beispielsweise ein Akkumulator oder eine Brennstoffzelle, elektrisch geladen werden. Wenn die Gleichstromquelle gleichzeitig als Gleichstromsenke ausgebildet ist (Akkumulator), kann eine Ladung auch durch einen Bremsvorgang des Kraftfahrzeugs erfolgen, wobei der 3-Phasen-Drehstrommotor als Generator wirkt und die erzeugte 3-Phasen-Wechselspannung durch das Leistungsmodul 2 in eine Gleichspannung umgewandelt wird. Beispielsweise ist der Akkumulator als Nickel-Metallhydrid-Akkumulator mit einer Betriebsspannung im Bereich von 100 bis 600 Volt ausgeführt. Durch einen Hochsetzsteller (nicht gezeigt) kann einer Erhöhung der Zwischenkreisspannung U_{ZK} gegenüber der Betriebsspannung der Gleichstromquelle erreicht werden.

In Fig. 1 nicht dargestellt, da wie erwähnt für das Verständnis der Erfindung nicht erforderlich, sind dem Fachmann an sich bekannte weitere Module des 3-Phasen-Wechselrichters 1, welche in Parallelschaltung zum Leistungsmodul 2 an die beiden Zwischenkreisleitungen 9, 9' elektrisch angeschlossen sind. Namentlich genannt seien beispielsweise Filtermodule und ein Drosselmodul für jede Wechselstromphase sowie ein so genanntes Y-Kondensator-Modul. Ebenso nicht gezeigt sind Stromsensoren für die drei Wechselstromphasen.

Ein wesentlicher Aspekt der Erfindung ist eine steuerbare Zusatzschaltung zur schnellen Entladung des Zwischenkreises 7, welche in Parallelschaltung zum Leistungsmodul 2 an die beiden Zwischenkreisleitungen 9, 9' elektrisch angeschlossen ist. So umfasst eine insgesamt mit der Bezugszahl 10 bezeichnete Schaltungsanordnung einen ersten Schaltungsteil 11 zur aktiven (d.h. steuerbaren), schnellen Entladung des Zwischenkreises 7 und einen zweiten Schaltungsteil 11' zur passiven (d.h. nicht steuerbaren), langsamen Entladung des Zwischenkreises 7. Generell kann durch den ersten Schaltungsteil 11 eine schnellere Entladung des Zwischenkreises 7 als durch den zweiten Schaltungsteil 11' erreicht werden.

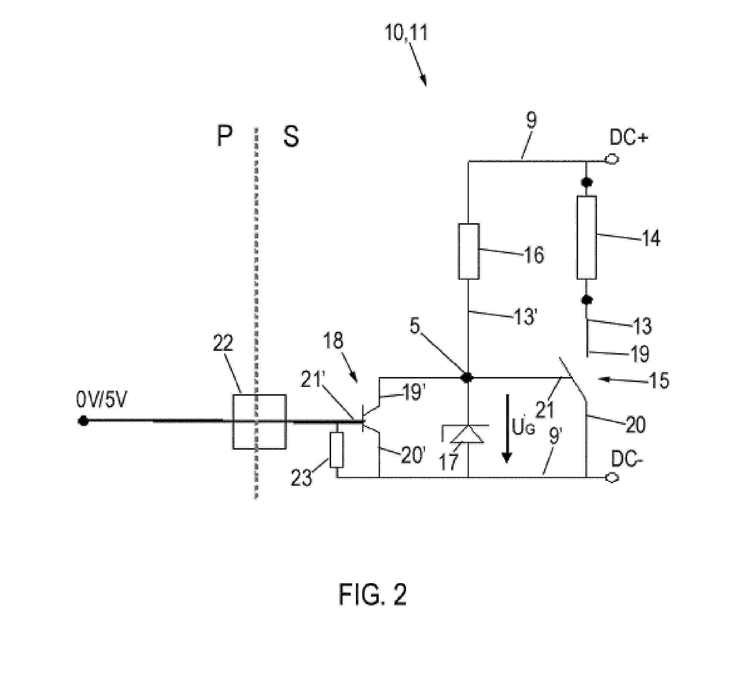

Der erste Schaltungsteil 11 zur schnellen Entladung des Zwischenkreises 7 wird im Zusammenhang mit Fig. 2 weiter unten näher erläutert. Der zweite Schaltungsteil 11' zur langsamen Entladung des Zwischenkreises 7 umfasst zwei in Parallelschaltung angeordnete Widerstandsketten 12, je bestehend aus zwei ohmschen Widerständen R1, R2, welche die beiden Zwischenkreisleitungen 9, 9' elektrisch miteinander verbinden. Die ohmschen Widerstände R1, R2 sind so gewählt, dass eine Entladung des Zwischenkreises 7 über einen hinreichend langen Zeitraum von beispielsweise bis zu mehreren Stunden erfolgt, so dass die Betriebsfähigkeit des 3-Phasen-Wechselrichtrs 1 nicht bzw. nicht nennenswert beeinträchtigt ist. Zudem wird eine übermäßige Erwärmung der ohmschen Widerstände R1, R2 durch einen vergleichsweise niedrigen Entladungsstrom vermieden. Im vorliegenden Ausführungsbeispiel sind als ohmsche Widerstände R1 = 228 kOhm und R2 = 1,15 kOhm gewählt, wobei es sich versteht, dass gleichermaßen andere für die beabsichtigte Anwendung geeignete Widerstände eingesetzt werden können, solange gewährleistet ist, dass die Entladedauer die Betriebsfähigkeit des 3-Phasen-Wechselrichtrs 1 nicht beeinträchtigt.

Sei nun Fig. 2 betrachtet, worin der erste Schaltungsteil 11 zur schnellen Entladung des Zwischenkreises 7 dargestellt ist. Im Unterschied zum zweiten Schaltungsteil 11, welcher nur eine passive (nicht steuerbare) Entladung des Zwischenkreises 7 ermöglicht, kann der erste Schaltungsteil 11 aktiv gesteuert werden, um wahlfrei entweder nur eine langsame Entladung des Zwischenkreises 7 oder in Kombination eine langsame und schnelle Entladung des Zwischenkreises 7 zu erreichen.

Der erste Schaltungsteil 11 umfasst zu diesem Zweck eine erste Reihenschaltung 13 aus einem Kaltleiter bzw. elektrischen Widerstand mit positivem Temperaturkoeffizienten, im Weiteren als PTC-Widerstand 14 bezeichnet, und einem Leistungsschalter 15 (in der Beschreibungseinleitung als "erster Halbleiterschalter" bezeichnet). Die erste Reihenschaltung 13 verbindet die beiden Zwischenkreisleitungen 9, 9' elektrisch miteinander, wobei das widerstandsseitige Ende mit einem nicht näher bezeichneten Verbindungspunkt der ersten Zwischenkreisleitung 9 und das schalterseitige Ende mit einem nicht näher bezeichneten Verbindungspunkt der zweiten Zwischenkreisleitung 9' elektrisch verbunden ist. Somit ist der Leistungsschalter 15 indirekt unter Zwischenschaltung des PTC-Widerstands 14 mit der ersten Zwischenkreisleitung 9 für das obere Potential (DC+) und direkt mit der zweiten Zwischenkreisleitung 9' für das untere Potential (DC-) elektrisch verbunden.

Beispielsweise weist der PTC-Widerstand 14 bei einer Temperatur von 25°C einen elektrischen Widerstand von 350 Ohm auf, welcher aufgrund der elektrischen Eigenschaften des Widerstandsmaterials mit steigender Temperatur zunimmt. Der PTC-Widerstand 14 ist aus Sicherheitsgründen am Gehäuse des 3-Phasen-Wechselrichters angebracht, was in Fig. 1 symbolisch veranschaulicht ist. Der elektrische Widerstand des PTC-Widerstands 14 ist zumindest bei Raumtemperatur wesentlich geringer, beispielsweise wenigstens um einen Faktor 500, als der elektrische Summenwiderstand der ohmschen Widerstände R1, R2 einer Widerstandskette 12. Dementsprechend ist der Entladestrom über die erste Reihenschaltung 13 wesentlich größer als über die Widerstandsketten 12.

Der Leistungsschalter 15 ist beispielsweise als bipolarer Leistungstransistor mit isolierter Gate-Elektrode (IGBT) oder Leistungs-MOSFET ausgebildet. In der ersten Reihenschaltung 13 ist der Leistungsschalter 15 mit seinem Last- bzw. Leistungspfad seriell mit dem PTC-Widerstand 14 verschaltet, wobei ein Eingang 19 (Kollektoranschluss bei einem IGBT bzw. Drainanschluss bei einem MOSFET) mit dem PTC-Widerstand 14 und ein Ausgang 20 (Emitteranschluss bei einem IGBT bzw. Sourceanschluss bei einem MOSFET) mit der zweiten Zwischenkreisleitung 9' elektrisch verbunden ist.

Der erste Schaltungsteil 11 umfasst weiterhin eine in Parallelschaltung zur ersten Reihenschaltung 13 angeordnete zweite Reihenschaltung 13' aus einem elektrischen Vorschaltwiderstand 16 (ohmscher Widerstand) und einer Zener-Diode 17, welche die beiden Zwischenkreisleitungen 9, 9' elektrisch miteinander verbindet. Hierbei ist das widerstandsseitige Ende der zweiten Reihenschaltung 13' mit einem nicht näher bezeichneten Verbindungspunkt der ersten Zwischenkreisleitung 9 und das diodenseitige Ende derselben mit einem nicht näher bezeichneten Verbindungspunkt der zweiten Zwischenkreisleitung 9' elektrisch verbunden, so dass die Zener-Diode 17 indirekt unter Zwischenschaltung des Vorschaltwiderstands 16 mit der ersten Zwischenkreisleitung 9 für das obere Potential (DC+) und direkt mit der zweiten Zwischenkreisleitung 9' für das untere Potential (DC-) elektrisch verbunden ist. Bezogen auf die Zwischenkreisspannung U_{ZK} ist die Zener-Diode 17 in Sperrrichtung angeordnet, wird jedoch bei einer Zwischenkreisspannung U_{ZK} bei sowie oberhalb einer Durchbruchsspannung elektrisch leitend.

Ein Steuereingang 21 (Gateanschluss) des Leistungsschalters 15 ist mit einem Verbindungspunkt 22 zwischen dem Vorschaltwiderstand 16 und der Zener-Diode 17 (Mittelabgriff) elektrisch verbunden. Dies hat zur Folge, dass im Spannungsdurchbruch eine über die Zener-Diode 17 abfallende Spannung U_{G} bzw. das elektrische Potential am Verbindungspunkt 22 am Steuereingang 21 des Leistungsschalters 15 anliegt. Insbesondere ist die Zener-Diode 17 so ausgelegt, dass die im Spannungsdurchbruch über die Zener-Diode 17 abfallende Spannung einer Steuerspannung zum Schalten des Leistungsschalters 15 in den leitenden bzw. Durchlasszustand entspricht. Da im Spannungsdurchbruch über die Zener-Diode 17 stets dieselbe Spannung abfällt, liegt am Steuereingang 21 des Leistungsschalters 15 unabhängig von der Größe der Zwischenkreisspannung U_{ZK} stets dieselbe Steuerspannung an.

Der Steuereingang 21 des Leistungsschalters 15 ist unter Zwischenschaltung des Lastpfads eines weiteren Halbleiterschalters bzw. Steuerschalter 18 (in der Beschreibungseinleitung als "zweiter Halbleiterschalter" bezeichnet) mit dem Ausgang 20 des Leistungsschalters 15 elektrisch verbunden. Zu diesem Zweck ist ein Eingang 19' des Steuerschalters 18 mit dem Verbindungspunkt 22 zwischen dem Vorschaltwiderstand 16 und der Zener-Diode 17 der zweiten Reihenschaltung 13' und ein Ausgang 20' des Steuerschalters 18 mit der zweiten Zwischenkreisleitung 9' elektrisch verbunden. Weiterhin ist der Steuereingang 21' des Steuerschalters 18 über eine Optokopplung 22 (Lichtwellenleiter) mit einer Ansteuerlogik (nicht dargestellt) elektrisch verbunden. Durch die Ansteuerlogik kann der Steuereingang 21' des Steuerschalters 18 wahlweise mit einer Steuerspannung zum Schalten in den leitenden bzw. Durchlasszustand, beispielsweise 5 Volt, oder mit einer Steuerspannung, beispielsweise 0 Volt, zum Schalten in den geöffneten bzw. Sperrzustand beaufschlagt werden. Durch die Optokopplung 22 wird eine galvanische Trennung zwischen einer Niedervolt-Primärseite P und einer Hochvolt-Sekundärseite S erreicht, was in Fig. 2 durch eine gestrichelte Linie angedeutet ist. Es versteht sich, dass anstelle einer Optokopplung 22 ein anderes Mittel zur galvanischen Trennung von Primär- und Sekundärseite eingesetzt werden kann. Weiterhin ist der Steuereingang 21' des Steuerschalters 18 über einen ohmschen Widerstand 23 an die zweite Zwischenkreisleitung 9' elektrisch angeschlossen.

Der Steuerschalter 18 ist beispielsweise als Feldeffekttransistor (FET), insbesondere als Metall-Oxid-Feldeffekttransistor (MOSFET), ausgeführt, wobei es nicht erforderlich ist, den Steuerschalter 18 als Leistungstransistor auszubilden.

Somit ist im zweiten Schaltungsteil 11' der Steuerschalter 18 in Parallelschaltung zur Zener-Diode 17 angeordnet, so dass die Zener-Diode 17 bei auf Durchlass geschaltetem Steuerschalter 18 elektrisch umgangen wird (Bypass-Leitung).

Befindet sich der Steuerschalter 18 im Durchlasszustand, so liegt unter elektrischer Umgehung der Zener-Diode 17 das untere Potential (DC-) des Zwischenkreises 7 am Steuereingang 19 des Leistungsschalters 15 an. Steuereingang 19 und Ausgang 20 des Leistungsschalters 15 befinden sich somit auf gleichem Potential (DC-), so dass der Leistungsschalter 15 im Sperrzustand ist. In dieser Situation ist eine aktive Entladung des Zwischenkreises 7 über den PTC-Widerstand 14 nicht möglich. Eine solche Deaktivierung der schnellen Entladung des Zwischenkreiskondensators 8 ist für die ordnungsgemäße Funktion des 3-Phasen-Wechselrichters 1 im normalen Betrieb des Kraftfahrzeugs gewünscht. Beispielsweise wird der Steuerschalter 18 durch die Ansteuerlogik beim Starten des 3-Phasen-Drehstrommotors in den Durchlasszustand und beim Stoppen des 3-Phasen-Drehstrommotors in den Sperrzustand geschaltet. Befindet sich der Steuerschalter 18 andererseits im Sperrzustand, so liegt am Steuereingang 21 des Leistungsschalters 15 die am Verbindungspunkt 22 abgegriffene Spannung bzw. Potential an. Für den Fall, dass die Zwischenkreisspannung U_{ZK} die Durchbruchsspannung der Zener-Diode 17 übersteigt, fällt über der Zener-Diode 17 stets dieselbe Spannung ab, welche so gewählt ist, dass sie der Steuerspannung des Leistungsschalters 17 entspricht. Somit wird der Leistungsschalter 17 selbsttätig durch die von der Zwischenkreisspannung U_{ZK} abgegriffene Steuerspannung in seinen leitenden bzw. Durchlasszustand geschaltet, solange die Zwischenkreisspannung U_{ZK} die Durchbruchsspannung der Zener-Diode 17 übersteigt. In dieser Situation kann der Zwischenkreis 7 über den PTC-Widerstand 14 (teilweise) entladen werden.

Die Entladung des Zwischenkreises 7 über den PTC-Widerstand 14 erfolgt aufgrund des geringen elektrischen Widerstands des PTC-Widerstands 14 wesentlich schneller als über die beiden Widerstandsketten 12, vorzugsweise innerhalb eines Zeitintervalls im einstelligen Sekundenbereich, beispielsweise innerhalb weniger als 5 Sekunden. Hierbei kann eine übermäßige Erwärmung des PTC-Widerstands 14 durch den dabei auftretenden hohen Entladestrom durch den Anstieg des elektrischen Widerstands mit zunehmender Temperatur vermieden werden. In der Praxis zeigt sich, dass die Temperatur des PTC-Widerstands 14 bis zu einer maximalen Betriebstemperatur ansteigt, wobei der PTC-Widerstand 14 in Abhängigkeit der zu entladenden Zwischenkreisspannung U_{ZK} so ausgelegt ist, dass seine maximale Betriebstemperatur eine zerstörungsfreie Entladung des Zwischenkreises 7 ermöglicht. Beispielsweise liegt die maximale Betriebstemperatur des PTC-Widerstands 14 im Bereich von 130 bis 160°C.

Eine schnelle Entladung des Zwischenkreises 7 kann somit in vorteilhafter Weise alleinig durch einen Spannungsabgriff an der Zwischenkreisspannung U_{ZK} erreicht werden, vorausgesetzt, dass der Steuerschalter 18 im Sperrzustand ist. Eine solche Situation tritt ein, wenn der Steuereingang 21' des Steuerschalters 18 durch die Ansteuerlogik mit beispielsweise 0 Volt beaufschlagt wird, was regelungstechnisch beim Abstellen des Elektromotors vorgesehen ist. In vorteilhafter Weise wird jedoch auch dann, wenn eine regelungstechnische Steuerung des Steuerschalters 18 nicht mehr möglich, beispielsweise im Falle eines unfallbedingten Kabelbruchs, eine schnelle Entladung des Zwischenkreises 7 durch die in der zweiten Reihenschaltung 13' von der Zwischenkreisspannung U_{ZK} abgegriffene Spannung bewirkt.

Weiterhin wird der Steuereingang 21' des Steuerschalters 18 mit dem unteren Potential (DC-) des Zwischenkreises 7 beaufschlagt, wodurch erreicht werden kann, dass sich der Steuerschalter 18 beispielsweise im Falle eines unfallbedingten Kabelbruchs stets im Sperrzustand befindet. In vorteilhafter Weise wird ein Floaten bzw. ein undefinierter Zustand des Steuereingangs 21' des Steuerschalters 18 vermieden, so dass eine aktive, schnelle Entladung des Zwischenkreises 7 stets sichergestellt werden kann.

Fällt die Zwischenkreisspannung U_{ZK} während der Entladung auf einen Spannungswert unterhalb der Durchbruchsspannung der Zener-Diode 17, fällt die Steuerspannung U_{G} des Leistungsschalters 15 nicht mehr über die Zener-Diode 17 ab, was zur Folge hat, dass der Leistungsschalter 15 in seinen Sperrzustand übergeht. Eine weitere Entladung des Zwischenkreises 7 über den PTC-Widerstand 14 ist somit nicht mehr möglich, so dass eine (für Personen ungefährliche) Restspannung von beispielsweise 10 bis 50 Volt im Zwischenkreis 7 verbleibt, die über einen wesentlich längeren Zeitraum über die Widerstandsketten 12 entladen werden kann. Vorzugsweise beträgt die Restspannung weniger als 20%, insbesondere weniger als 10%, der Zwischenkreisspannung U_{ZK} im normalen Betrieb des 3-Phasen-Wechselrichters 1. Eine Restspannung im Zwischenkreis 7 hat den Vorteil, dass der Zwischenkreiskondensator 8 schneller auf die für den Betriebszustand des 3-Phasen-Wechselrichters gewünschte Zwischenkreisspannung U_{ZK} geladen werden kann, so dass eine beschleunigte Wiederaufnahme des Betriebs des 3-Phasen-Wechselrichters 1 ermöglicht ist.

Die erfindungsgemäße Schaltungsanordnung schafft somit erstmals die Möglichkeit für eine steuerbare bzw. aktive, schnelle Entladung des Zwischenkreises eines Stromrichters beispielsweise innerhalb weniger Sekunden. Dies wird durch Entladung des Zwischenkreiskondensators über einen PTC-Widerstand erreicht, wobei die Entladung vom Leitungszustand des Lastpfads eines Leistungsschalters abhängt, dessen Steuerspannung von der Zwischenkreisspannung abgegriffen wird. Zu diesem Zweck ist ein als Zener-Diode ausgebildetes selbstschaltendes Stromventil vorgesehen, an dem unabhängig von der Größe der Zwischenkreisspannung stets dieselbe Spannung abfällt, wobei die Zener-Diode so ausgebildet ist, dass diese Spannung der abgegriffenen Steuerspannung des Leistungsschalters entspricht. Durch einen weiteren Halbleiterschalter zur Steuerung des Leistungsschalters kann unter elektrischer Umgehung der Zener-Diode die schnelle Entladung des Zwischenkreises für den normalen Betrieb des Stromrichters gezielt aktiviert oder deaktiviert werden. Die erfindungsgemäße Schaltungsanordnung zur aktiven, schnellen Entladung des Zwischenkreises zeichnet sich durch einen technisch besonders einfachen, kostengünstigen und zugleich robusten Aufbau aus. Bestehende Stromrichter können in einfacher Weise nachgerüstet werden.

### Bezugszeichenliste

- 1: 3-Phasen-Wechselrichter
- 2: Leistungsmodul
- 3: Halbbrücke
- 4: Leistungsschalter
- 5: Verbindungspunkt
- 6: Freilaufdiode
- 7: Zwischenkreis
- 8: Zwischenkreiskondensator
- 9, 9': Zwischenkreisleitung
- 10: Schaltungsanordnung
- 11, 11': Schaltungsteil
- 12: Widerstandskette
- 13, 13': Reihenschaltung
- 14: PTC-Widerstand
- 15: Leistungsschalter
- 16: Vorschaltwiderstand
- 17: Zener-Diode
- 18: Steuerschalter
- 19, 19': Eingang
- 20, 20': Ausgang
- 21, 21': Steuereingang
- 22: Optokopplung
- 23: ohmscher Widerstand

## Patentansprüche

1. Schaltungsanordnung (10) für einen Stromrichter (1) mit einem einen Ladungsspeicher (8) aufweisenden Zwischenkreis (7), der über eine erste Zwischenkreisleitung (9) für ein oberes Potential (DC+) und eine zweite Zwischenkreisleitung (9') für ein unteres Potential (DC-) einer Zwischenkreisspannung (U_{ZK}) verfügt, mit den folgenden Merkmalen:
- eine erste Reihenschaltung (13) aus einem elektrischen Widerstand (14) mit positivem Temperaturkoeffizienten und einem als Leistungsschalter ausgebildeten ersten Halbleiterschalter (15) ist an die beiden Zwischenkreisleitungen (9, 9') elektrisch angeschlossen,
- eine in Parallelschaltung zur ersten Reihenschaltung (13) angeordnete zweite Reihenschaltung (13') aus einem ohmschen Widerstand (16) und einer Zener-Diode (17) ist an die beiden Zwischenkreisleitungen (9, 9') elektrisch angeschlossen, wobei die Zener-Diode (17) so ausgelegt ist, dass eine im Spannungsdurchbruch abfallende Spannung einer Steuerspannung des ersten Halbleiterschalters (15) entspricht,
- ein Steuereingang (21) des ersten Halbleiterschalters (15) ist mit einem Verbindungspunkt (5) zwischen dem ohmschen Widerstand (16) und der Zener-Diode (17) elektrisch verbunden,
- der Steuereingang (21) des ersten Halbleiterschalters (15) ist über einen zur Zener-Diode (17) parallel geschalteten zweiten Halbleiterschalter (18) mit einem Ausgang (20) des ersten Halbleiterschalters (15) elektrisch verbunden.

2. Schaltungsanordnung (10) nach Anspruch 1, bei welcher ein Steuereingang (21') des zweiten Halbleiterschalters (18) mit der zweiten Zwischenkreisleitung (9') elektrisch verbunden ist.

3. Schaltungsanordnung (10) nach einem der Ansprüche 1 oder 2, bei welcher ein Eingang (19') des zweiten Halbleiterschalters (18) mit dem Verbindungspunkt (5) zwischen dem ohmschen Widerstand (16) und der Zener-Diode (17) elektrisch verbunden ist.

4. Schaltungsanordnung nach einem der Ansprüche 1 bis 3, bei welcher ein Ausgang (20') des zweiten Halbleiterschalters (18) mit der zweiten Zwischenkreisleitung (9') elektrisch verbunden ist.

5. Schaltungsanordnung nach einem der Ansprüche 1 bis 4, bei welcher der Steuereingang (21') des zweiten Halbleiterschalters (18) unter Zwischenschaltung eines Trennorgans (22) zur galvanischen Trennung einer Hochvoltseite (S) von einer Niedervoltseite (P) mit einer Ansteuerlogik elektrisch verbunden ist.

6. Schaltungsanordnung nach einem der Ansprüche 1 bis 5, bei welcher die beiden Zwischenkreisleitungen (9, 9') über zumindest einen ohmschen Widerstand (R1, R2), der wenigstens um einen Faktor 500 größer ist als der Widerstand (14) mit positivem Temperaturkoeffizienten, elektrisch miteinander verbunden sind.

7. Schaltungsanordnung nach einem der Ansprüche 1 bis 6, bei welcher der elektrische Widerstand (14) mit positivem Temperaturkoeffizienten einen solchen elektrischen Widerstand hat, dass der Ladungsspeicher (8) zumindest bis auf eine vorgebbare Restspannung von weniger als 20%, insbesondere weniger als 10%, der Zwischenkreisspannung (U_{ZK}) in einem Zeitraum im einstelligen Sekundenbereich entladbar ist.

8. Stromrichter mit einer Schaltungsanordnung nach einem der Ansprüche 1 bis 7.

9. Kraftfahrzeug mit einem Elektro- oder Hybridantrieb, das mit einem Stromrichter nach Anspruch 8 zur Speisung eines Elektromotors ausgerüstet ist.

10. Verfahren zum Betreiben eines Stromrichters mit einem einen Ladungsspeicher aufweisenden Spannungszwischenkreis zum Bereitstellen einer Zwischenkreisspannung, bei welchem, gesteuert durch einen zweiten Halbleiterschalter, eine Steuerspannung für einen als Leistungsschalter ausgebildeten ersten Halbleiterschalter von der Zwischenkreisspannung abgegriffen und der Zwischenkreis über eine Reihenschaltung aus einem Widerstand mit positivem Temperaturkoeffizienten und dem durch die Steuerspannung auf Durchlass geschalteten Lastpfad des ersten Halbleiterschalters entladen wird.

11. Verfahren nach Anspruch 10, bei welchem ein Steuereingang des zweiten Halbleiterschalters durch ein unteres Potential der Zwischenkreisspannung vorgespannt wird.

12. Verfahren nach einem der Ansprüche 10 oder 11, bei welchem der Ladungsspeicher in einem Zeitraum im einstelligen Sekundenbereich entladen wird.
